# FASCICULE DE BREVET EUROPEEN

(11) **EP 0 730 377 B1**
(45) Date de publication et mention de la délivrance du brevet: **22.01.2003**
(21) Numéro de dépôt: 96410013.5
(22) Date de dépôt: 23.02.1996
(51) Int. Cl.: H04N 7/00, H04L 25/06, H04N 7/035

(54) **Traitement d'un signal asynchrone présentant periodiquement des salves de synchronisation**
Verarbeitung eines asynchronen Signals, das eine periodische Synchronisationsimpulsfolge enthält
Processing an asynchronous signal containing a periodical synchronisation burst

(30) Priorité: 28.02.1995 FR 9502538
(43) Date de publication de la demande: 04.09.1996
(73) Titulaire: STMicroelectronics S.A., 92120 Montrouge (FR)
(72) Inventeur: Leurent, Patrice, 38109 Saint Egreve (FR); Lagarde, Jean-Pierre, 38950 Saint Martin le Vinoux (FR)
(74) Mandataire: de Beaumont, Michel

(56) Documents cités:
- EP-A- 0 128 473
- EP-A- 0 421 897
- EP-A- 0 531 549
- EP-A- 0 594 246
- US-A- 4 823 360
- US-A- 5 223 930
- PATENT ABSTRACTS OF JAPAN vol. 007, no. 058 (E-163), 10 Mars 1983 & JP-A-57 203384 (SONY KK), 13 Décembre 1982,

## Description

La présente invention concerne un circuit destiné à restituer les niveaux logiques de bits transmis par un signal de manière asynchrone et en série. La présente invention vise plus particulièrement le cas où le signal de transmission présente périodiquement des salves de synchronisation permettant de réajuster périodiquement le circuit de traitement.

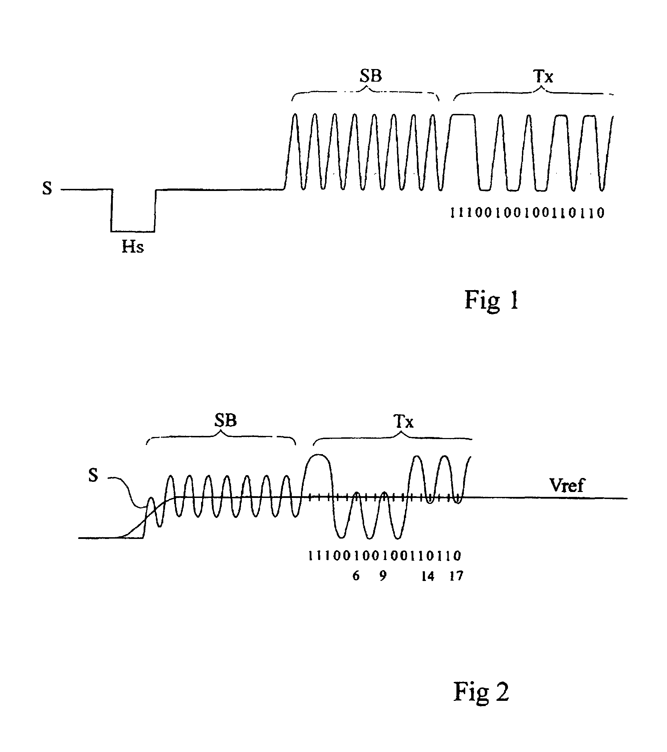

La figure 1 représente un exemple d'allure de signal S de transmission d'informations de télétexte. Les informations de télétexte sont transmises pendant des lignes non-visibles d'une image de télévision. Ainsi, chaque "ligne" du signal télétexte est précédée d'une impulsion de synchronisation de ligne Hs. Un certain temps après cette impulsion Hs commence une salve de synchronisation SB de niveau moyen supérieur au niveau précédant la salve. Cette salve est composée, par exemple de huit périodes de sinusoïde. La demi-période de ces sinusoïdes correspond à la durée nominale de transmission des bits qui vont suivre. Ainsi, immédiatement après la salve de synchronisation SB, on trouve le signal effectif Tx de transmission des bits. Dans cet exemple, on commence par transmettre les bits 11100100100110110.

Selon les conditions de réception, un signal télétexte peut être bruité, et d'amplitude et de phase variables. Grâce à la salve de synchronisation SB au début de chaque ligne de télétexte, le circuit de traitement peut réajuster périodiquement la phase de sa fréquence de réception et un seuil de discrimination destiné à distinguer les niveaux logiques hauts des nivaux logiques bas lors de la transmission effective Tx. Le brevet américain 5 136 382 décrit un tel circuit de traitement. Dans ce circuit, le seuil de discrimination suit l'évolution moyenne du signal S jusqu'à ce qu'une partie de la salve de synchronisation soit survenue, de manière que le seuil de discrimination s'établisse à la valeur moyenne de la salve de synchronisation. A ce moment là, le seuil de discrimination est maintenu constant pendant toute la durée de la transmission effective Tx.

Pour pouvoir déterminer à quel moment on fixe le seuil de discrimination, il est nécessaire de détecter la survenue de la salve de synchronisation SB. En effet, l'intervalle de temps séparant cette salve de l'impulsion de synchronisation Hs varie aléatoirement autour d'une valeur nominale dans des proportions relativement importantes. Pour cela, par exemple, après l'impulsion de synchronisation Hs, on détecte le moment où le signal S dépasse le seuil de discrimination qui, puisqu'il suit l'évolution moyenne du signal S, se trouve au début de la salve de synchronisation à un niveau inférieur aux sinusoïdes de la salve. Pour diminuer la probabilité d'une détection intempestive causée par le bruit du signal S, cette détection est validée le plus tard possible après l'impulsion de synchronisation Hs et seulement si le signal S satisfait à un critère tel que le dépassement du seuil de discrimination pendant un temps prédéterminé.

Malgré ces précautions, il arrive parfois, lorsque le bruit est important, que ce critère de détection de la salve de synchronisation soit satisfait avant la survenue effective de cette salve. Une conséquence en est que le seuil de discrimination sera fixé à une mauvaise valeur qui entraînera des erreurs de restitution des bits de la partie Tx du signal.

Par ailleurs, selon les conditions de réception, le signal télétexte peut subir des pertes dans les hautes fréquences, notamment si le signal de télétexte subit un filtrage de Nyquist destiné à réduire des phénomènes d'écho néfastes (modulation inter-symbole).

La figure 2 représente une exemple d'allure des parties SB et Tx du signal de la figure 1 subissant des pertes dans les hautes fréquences. La salve de synchronisation SB, de fréquence relativement élevée, subit une importante atténuation. Toutefois, grâce à la symétrie de la salve SB, sa valeur moyenne n'est pas affectée, ce qui permet d'établir convenablement le seuil de discrimination Vref. Les problèmes peuvent se présenter notamment lorsque l'on transmet des 1 isolés précédés et suivis d'au moins deux 0, comme c'est le cas des sixième et neuvième bits transmis à la figure 2, ou que l'on transmet des 0 isolés précédés et suivis d'au moins deux 1, comme c'est le cas des quatorzième et dix septième bits transmis à la figure 2. En effet, en transmettant plusieurs bits consécutifs au même état, le signal peut varier pendant la durée de ces plusieurs bits, ce qui lui permet d'atteindre son excursion maximale. Par contre, si le bit transmis immédiatement après est à un état différent isolé, le signal ne peut varier que pendant la durée d'un bit, ce qui ne lui permet pas, en général, d'atteindre son excursion maximale. Dans ce cas, comme cela est représenté pour les sixième, neuvième, quatorzième et dix-septième bits de la figure 2, le signal S franchit à peine le seuil de discrimination Vref. Il est alors très probable, notamment à cause du bruit, que l'on échantillonne des états erronés des bits. De plus, dans certains cas, le signal S ne parvient même pas à franchir le seuil Vref.

EP-A-0 594 246 décrit un circuit qui comprend un circuit suiveur-bloqueur, auquel le signal de données (D) et un signal de commande (C) sont appliqués, pour générer un signal de sortie (T) qui suit le signal de données lorsque le signal de commande a une première valeur et maintenir le signal de données, lors de la transition du signal de commande à une deuxième valeur. Deux comparateurs 3 et 4 détectent l'apparition de valeurs de crête du signal de données, et si le signal de données croise le seuil de comparaison provisoire. Le signal de sortie suit le signal de données lorsque le signal de données croise le seuil de comparaison provisoire et maintient le signal de données si une valeur de crête du signal de données apparaît.

Un objet de la présente invention est de prévoir un circuit que l'on pourra qualifier "d'intermédiaire", qui seul n'a aucune utilité, mais qui par contre a de nombreuses applications lorsqu'il est complété par d'autres circuits. Notamment, ce circuit intermédiaire est utilisé selon l'invention pour améliorer la fiabilité de la détection de salves de synchronisation et pour limiter les erreurs d'échantillonnage de bits lorsque le signal subit des pertes dans les hautes fréquences.

Cet objet est atteint grâce à un circuit de restitution de bits transmis par un signal asynchrone, comprenant un premier comparateur du niveau du signal asynchrone à un premier seuil ajusté en fonction de la sortie du premier comparateur pendant des salves de synchronisation du signal asynchrone. Il comprend en outre un deuxième comparateur du niveau du signal asynchrone à un deuxième seuil corrélé au premier seuil, et un troisième comparateur du niveau du signal asynchrone à un troisième seuil corrélé au premier seuil de manière que le premier seuil soit compris entre les deuxième et troisième seuils. Le procédé de limitation d'erreurs de restitution revendiqué consiste à prélever périodiquement l'état de la sortie du premier comparateur et l'affecter au bit à restituer. Si les sorties des deuxième et troisième comparateurs sont à des états différents au moment où est prélevé un état de la sortie du premier comparateur, on affecte au bit restitué correspondant l'inverse de l'état du bit précédemment restitué.

Selon un mode de réalisation de la présente invention, l'inverse de l'état du bit précédent n'est affecté au bit à restituer que si les sorties des deuxième et troisième comparateurs étaient à des états égaux pour le bit précédent.

Selon un mode de réalisation de la présente invention, l'inverse de l'état du bit précédent n'est affecté au bit à restituer que si le signal asynchrone subit des pertes dans les hautes fréquences.

Selon un mode de réalisation de la présente invention, les pertes dans les hautes fréquences sont détectées lorsque la différence des rapports cycliques des signaux de sortie des deuxième et troisième comparateurs pendant les salves de synchronisation excède en valeur absolue un seuil prédéterminé.

Selon un deuxième aspect de la présente invention revendiqué dans la revendication 5, la détection est réalisée lorsque la différence des rapports cycliques des signaux de sortie des deuxième et troisième comparateurs pendant les salves de synchronisation excède en valeur absolue un seuil prédéterminé.

Ces objets, caractéristiques et avantages ainsi que d'autres de la présente invention seront exposés plus en détail dans la description suivante de modes de réalisation particuliers, faite à titre non limitatif à l'aide des figures jointes parmi lesquelles :
la figure 1, précédemment décrite, représente une allure nominale de signal de transmission de télétexte ;
la figure 2 représente l'allure du signal de la figure 1 lorsque le signal subit des pertes dans les hautes fréquences ;
la figure 3 représente un mode de réalisation de circuit intermédiaire selon la présente invention ;
la figure 4 représente des signaux du circuit de la figure 3 dans une application pour limiter les erreurs de transmission des bits dans le cas où le signal de transmission présente des pertes dans les hautes fréquences ; et
la figure 5 représente des signaux du circuit de la figure 3 dans une application pour détecter que le signal de transmission présente des pertes dans les hautes fréquences.

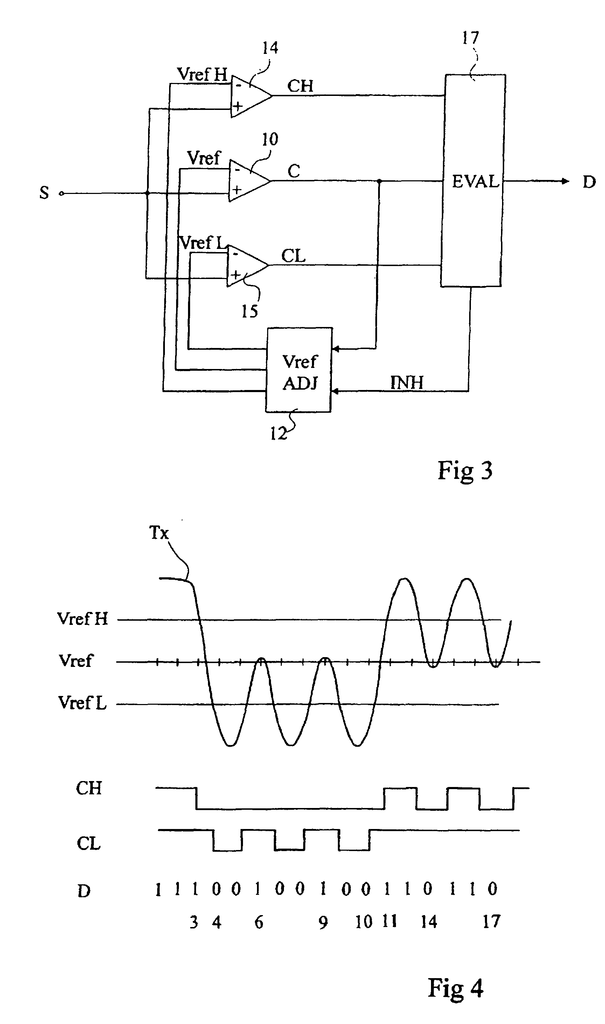

A la figure 3, un signal de transmission S est comparé à un seuil de discrimination Vref par un comparateur 10. Le seuil Vref est fourni par un circuit 12 qui ajuste ce seuil en fonction des états de la sortie C du comparateur 10. Par exemple, le circuit 12 comprend un compteur cadencé par une horloge fixe, ce compteur étant sélectionné en mode de comptage par l'état haut de la sortie C et en mode décomptage par l'état bas de la sortie C. Le contenu de ce compteur est converti en analogique pour fournir le seuil Vref. Avec cette configuration, le seuil Vref suit l'évolution moyenne du signal S. Lorsque l'on veut fixer le seuil Vref, on fournit au circuit 12 un signal d'inhibition INH qui bloque le contenu du compteur.

Selon l'invention, le circuit 12 fournit en outre un seuil haut VrefH supérieur au seuil Vref et, le cas échéant, un seuil bas VrefL inférieur au seuil Vref. Le signal de transmission S est comparé à ces seuils VrefH et VrefL par deux comparateurs respectifs 14 et 15. Le signal S est appliqué, par exemple, aux entrées non-inverseuses des comparateurs alors que les seuils VrefL, Vref et VrefH sont appliqués aux entrées inverseuses. Les seuils VrefH et VrefL sont corrélés au seuil Vref, c'est-à-dire, par exemple, qu'ils évoluent parallèlement au seuil Vref. Ces seuils VrefH et VrefL peuvent être fournis de nombreuses manières à partir du seuil Vref, par exemple, par un convertisseur numérique/analogique qui fournit le seuil VrefH supérieur de quelques pas de conversion au seuil Vref et le seuil VrefL inférieur de quelques pas de conversion au seuil Vref. Une autre possibilité est de fournir le seuil Vref au milieu d'un pont de quatre résistances connecté entre deux bornes d'alimentation, le seuil VrefH étant prélevé entre les deux résistances les plus proches de l'une des bornes et le seuil VrefL étant prélevé entre les deux résistances les plus proches de l'autre des bornes.

Le circuit décrit jusqu'à maintenant n'a aucune utilité particulière en tant que tel si ce n'est de fournir trois tensions corrélées distinctes dont la tension médiane suit l'évolution moyenne du signal de transmission S. Les sorties respectives CH, C et CL des comparateurs 14, 10 et 15 sont fournies à un circuit d'évaluation 17 qui est choisi en fonction de l'application envisagée du circuit intermédiaire selon l'invention.

Pour augmenter la fiabilité de détection de la salve de synchronisation SB (figure 1), le circuit d'évaluation 17 est prévu, selon l'invention, pour effectuer les opérations suivantes. Au moment où on décide de rechercher la présence de la salve de synchronisation SB, c'est-à-dire après une impulsion de synchronisation Hs, au lieu d'observer la sortie C du comparateur 10, on observe la sortie CH du comparateur 14. Le seuil VrefH de ce comparateur 14, supérieur au seuil Vref, est choisi, par exemple, au voisinage de l'amplitude maximale du bruit du signal S. Dans ce cas, la sortie CH du comparateur 14 a une probabilité très faible d'être à 1 avant la survenue de la salve de synchronisation SB alors que la sortie C du comparateur 10 a une probabilité de 50 % d'être à 1 ou à 0 étant donné que le seuil Vref est à la valeur moyenne du bruit du signal S. Par conséquent, la sortie CH présente, contrairement à la sortie C, une probabilité très faible de satisfaire intempestivement, à cause du bruit, un critère de détection de début de la salve de synchronisation SB. Un tel critère est, par exemple, le maintien d'un état 1 de la sortie CH au moins pendant environ une demi-période de la salve de synchronisation SB, suivi d'une transition à 0.

Dès que le critère de détection est satisfait par la sortie CH, on attend la durée nécessaire pour que le seuil Vref atteigne la moitié de l'amplitude de la salve SB, puis on fixe ce seuil, et par conséquent les seuils VrefH et VrefL, en activant le signal d'inhibition INH du circuit de réglage 12. Les seuils sont maintenus fixes au moins jusqu'à la fin de la partie de transmission Tx du signal S.

Bien entendu, la détection de la salve de synchronisation SB peut être accompagnée d'une confirmation. La détection se produit généralement pour la première alternance montante de la salve SB. Une confirmation pourra consister à détecter une ou plusieurs alternances montantes après la première dans des fenêtres associées.

La figure 4 représente des allures de signaux du circuit de la figure 3 et est destinée à illustrer le fonctionnement d'un circuit d'évaluation 17 selon l'invention pour limiter des erreurs d'échantillonnage de bits dans le cas où le signal S présente des pertes dans les hautes fréquences.

La figure 4 illustre une vue agrandie de la partie de transmission Tx du signal S de la figure 2, c'est-à-dire d'un signal S subissant des pertes dans les hautes fréquences. Les trois seuils VrefH, Vref et VrefL sont indiqués dans cette figure. On a également représenté les variations correspondantes des sorties CH et CL des comparateurs 14 et 15 ainsi que les données D que doit fournir le circuit d'évaluation 17. Les bits D sont représentés en correspondance avec des instants d'échantillonnnage marqués par des traits verticaux sur le seuil Vref.

Dans des cas normaux, à chaque transition, le signal S franchit les trois seuils VrefH, Vref et VrefL. Les sorties CH et CL présentent alors des transitions dans le même sens, légèrement décalées l'une par rapport à l'autre. On retrouve ces cas normaux à la figure 4 pour la transition descendante entre les troisième et quatrième bits et pour la transition montante entre le dixième et onzième bits.

Par contre, le signal S ne franchit que deux seuils (voire un seul seuil) dans les cas limites, comme ceux du sixième, neuvième, quatorzième et dix-septième bits. Pour les sixième et neuvième bits, les transitions du signal S ne franchissent que les seuils Vref et VrefL, et pour les quatorzième et dix-septième bits, les transitions du signal S ne franchissent que les seuils Vref et VrefH. Pour tous ces bits limites, la sortie CH est à 0 et la sortie CL est à 1, tandis que pour les autres bits, les sorties CH et CL sont égales.

Pour éviter des erreurs d'échantillonnage de ces bits limites, on détecte la situation où les sorties CH et CL sont distinctes et, au moment de l'échantillonnage des bits, au lieu de fournir le résultat de l'échantillonnage, on fournit l'inverse du bit précédent. C'est-à-dire que pour les sixième, neuvième, quatorzième et dix-septième bits, on fournit respectivement les inverses des cinquième, huitième, treizième et seizième bits. Dans la plupart des cas, ces bits précédents ne sont pas des bits susceptibles d'erreurs d'échantillonnage.

Dans des situations très rares, le signal S pourrait se stabiliser entre les seuils VrefL et VrefH sans toutefois que l'échantillonnage soit susceptible d'erreur (le signal S se trouve suffisamment à l'écart du seuil Vref). Dans ce cas, les sorties CH et CL sont toujours distinctes et si l'on appliquait la règle susmentionnée, les bits fournis seraient erronés. Pour éviter cela, lorsque les sorties CH et CL sont distinctes à un moment d'échantillonnage d'un bit, on ne fournit l'inverse du bit précédent que si les sorties CH et CL étaient égales pour ce bit précédent, ce qui correspond bien aux cas de la figure 4.

De préférence, le procédé de limitation d'erreurs d'échantillonnage qui vient d'être décrit n'est pas appliqué lorsque le signal S ne subit pas de pertes dans les hautes fréquences. En effet, le signal S est alors susceptible de présenter des échos de modulation inter-symbole qui pourraient provoquer des mauvaises interprétations des états des sorties CH et CL (si l'écho se produit à un instant d'échantillonnage, le bit correspondant serait remplacé par l'inverse du bit précédent, ce qui serait erroné). Le filtrage de Nyquist, qui fait subir au signal S des pertes dans les hautes fréquences, sert justement à réduire les phénomènes d'écho.

Ainsi, avant d'appliquer ce procédé de limitation d'erreurs, il convient de détecter si le signal S subit des pertes dans les hautes fréquences.

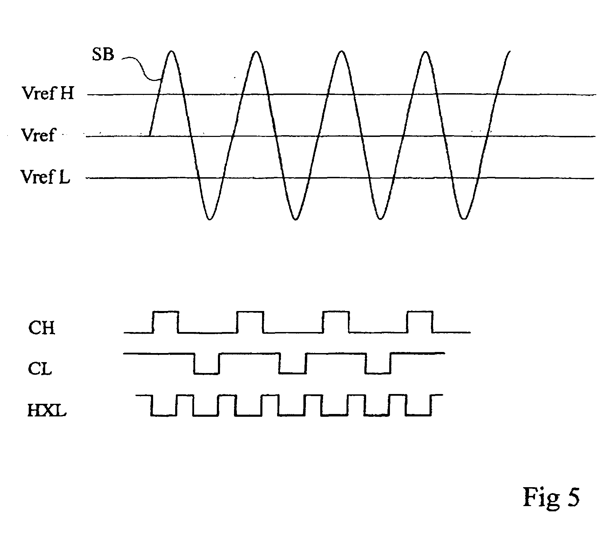

La figure 5 représente des allures de signaux du circuit de la figure 3 permettant d'illustrer une application du circuit de la figure 3 pour détecter que le signal S subit des pertes dans les hautes fréquences. Cette détection s'effectue pendant les salves de synchronisation SB en examinant un signal HXL correspondant à un OU Exclusif des sorties CH et CL. Pendant la salve de synchronisation SB, les sorties CH et CL sont périodiques et de rapports cycliques différents. La différence entre les rapports cycliques est d'autant plus élevée que l'amplitude de la salve SB est faible. Lorsque le signal S subit des pertes dans les hautes fréquences, l'amplitude de la salve SB est justement plus faible que sa valeur nominale. Ainsi, il suffit, pour détecter la présence de pertes dans les hautes fréquences, de comparer la différence des rapports cycliques des signaux CH et CL à une différence nominale. Le signal HXL présente des impulsions dont la largeur correspond justement à la différence, en valeur absolue, des rapports cycliques des signaux CH et CL. Pour mesurer la largeur des impulsions du signal HXL, par exemple, ces impulsions valident l'incrémentation à fréquence élevée d'un compteur. Au bout d'un nombre prédéterminé d'impulsions, on relève l'état du compteur. Si l'état de ce compteur excède une valeur nominale, on détecte que le signal S subit des pertes dans les hautes fréquences et on valide le procédé de limitation d'erreurs décrit en relation avec la figure 4.

Diverses applications selon l'invention du circuit de la figure 3 ont été décrites de manière fonctionnelle. L'homme du métier pourra facilement trouver de nombreuses solutions techniques différentes permettant de réaliser les fonctions décrites.

On a décrit à titre d'exemple trois applications possibles du circuit de la figure 3 (détection de salve de synchronisation, limitation d'erreurs d'échantillonnage, et détection de pertes dans les hautes fréquences) mais l'homme du métier pourra trouver de nombreuses autres applications.

## Revendications

1. Procédé de limitation d'erreurs de restitution de bits utilisant un premier comparateur (10) du niveau du signal asynchrone à un premier seuil (Vref) ajusté en fonction seulement de la sortie (C) du premier comparateur pendant des salves de synchronisation (SB) du signal asynchrone, un deuxième comparateur (14) du niveau du signal asynchrone à un deuxième seuil (VrefH) corrélé au premier seuil, et un troisième comparateur (15) du niveau du signal asynchrone à un troisième seuil (VrefL) corrélé au premier seuil de manière que le premier seuil soit compris entre les deuxième et troisième seuils, et **caractérisé en ce qu'**il comprend les étapes suivantes :
- prélever périodiquement l'état de la sortie (C) du premier comparateur (10) et l'affecter au bit à restituer ; et
- si les sorties (CH, CL) des deuxième (14) et troisième (15) comparateurs sont à des états différents au moment où est prélevé un état de la sortie du premier comparateur, affecter au bit restitué correspondant l'inverse de l'état du bit précédemment restitué.

2. Procédé de limitation d'erreurs de restitution selon la revendication 1, **caractérisé en ce que** l'inverse de l'état du bit précédent n'est affecté au bit à restituer que si les sorties (CH, CL) des deuxième (14) et troisième (15) comparateurs étaient à des états égaux pour le bit précédent.

3. Procédé de limitation d'erreurs de restitution selon la revendication 1, **caractérisé en ce que** l'inverse de l'état du bit précédent n'est affecté au bit à restituer que si le signal asynchrone subit des pertes dans les hautes fréquences.

4. Procédé de limitation d'erreurs de restitution selon la revendication 3, **caractérisé en ce que** les pertes dans les hautes fréquences sont détectées lorsque la différence des rapports cycliques des signaux de sortie (CH, CL) des deuxième (14) et troisième (15) comparateurs pendant les salves de synchronisation (SB) excède en valeur absolue un seuil prédéterminé.

5. Procédé de détection de signal (S) subissant des pertes dans les hautes fréquences utilisant un premier comparateur (10) du niveau du signal asynchrone à un premier seuil (Vref) ajusté en fonction seulement de la sortie (C) du premier comparateur pendant des salves de synchronisation (SB) du signal asynchrone, un deuxième comparateur (14) du niveau du signal asynchrone à un deuxième seuil (VrefH) corrélé au premier seuil, et un troisième comparateur (15) du niveau du signal asynchrone à un troisième seuil (VrefL) corrélé au premier seuil de manière que le premier seuil soit compris entre les deuxième et troisième seuils, et **caractérisé en ce que** la détection est réalisée lorsque la différence des rapports cycliques des signaux de sortie (CH, CL) des deuxième (14) et troisième (15) comparateurs pendant les salves de synchronisation (SB) excède en valeur absolue un seuil prédéterminé.

## Claims

1. A method for limiting bit restoration errors using a first comparator (10) for comparing the level of the asynchronous signal with a first threshold (Vref) adjusted as a function only of the output (C) of the first comparator during synchronization bursts (SB) of the asynchronous signal, a second comparator (14) for comparing the level of the asynchronous signal with a second threshold (VrefH) correlated to the first threshold, and a third comparator (15) for comparing the level of the asynchronous signal with a third threshold (VrefL) correlated to the first threshold so that the first threshold varies between the second and third thresholds, and **characterized in that** it includes the following steps:
- periodically polling the output state (C) of the first comparator (10) and assigning it to the bit to restore; and
- if the outputs (CH, CL) of the second (14) and third (15) comparators are at different states when a state of the output of the first comparator is polled, assigning to the corresponding restored bit the complement of the state of the bit previously restored.

2. The method for limiting bit restoration errors of claim 1, **characterized in that** the complement of the state of the preceding bit is assigned to the bit to restore only if the outputs (CH, CL) of the second (14) and third (15) comparators were at identical states for the preceding bit.

3. The method for limiting bit restoration errors of claim 1, **characterized in that** the complement of the state of the preceding bit is assigned to the bit to restore only if the asynchronous signal has high frequency losses.

4. The method for limiting bit restoration errors of claim 3, **characterized in that** the high frequency losses are detected if the difference between the duty cycles of the output signals (CH, CL) of the second (14) and third (15) comparators during synchronization bursts (SB) exceeds in absolute value a predetermined threshold.

5. A method for detecting signals (S) having high frequency losses using a first comparator (10) for comparing the level of the asynchronous signal with a first threshold (Vref) adjusted as a function only of the output (C) of the first comparator during synchronization bursts (SB) of the asynchronous signal, a second comparator (14) for comparing the level of the asynchronous signal with a second threshold (VrefH) correlated to the first threshold, and a third comparator (15) for comparing the level of the asynchronous signal with a third threshold (VrefL) correlated to the first threshold so that the first threshold varies between the second and third thresholds, and **characterized in that** the detection is achieved if the difference between the duty cycles of the output signals (CH, CL) of the second (14) and third (15) comparators during synchronization bursts (SB) exceeds in absolute value a predetermined threshold.

## Patentansprüche

1. Verfahren zum Begrenzen von Fehlern bei der Wiederherstellung von Bits, mit einem ersten Komparator zum Vergleich des Niveaus des asynchronen Signales mit einer ersten Schwelle (Vref), die als Funktion nur des Ausganges (C) des ersten Komparators während Synchronisationssalven (SB) des asynchronen Signales eingestellt ist, mit einem zweiten Komparator (14) zum Vergleich des Niveaus des asynchronen Signales mit einer zweiten Schwelle (VrefH), die mit der ersten Schwelle korreliert ist, und mit einem dritten Komparator (15) zum Vergleich des Niveaus des asynchronen Signales mit einer dritten Schwelle (VrefL), die mit der ersten Schwelle derart korreliert ist, dass die erste Schwelle zwischen der zweiten und dritten Schwelle gelegen ist, und **dadurch gekennzeichnet, dass** es die folgenden Schritte aufweist:
- periodisches Abtasten des Zustandes des Ausgangs (C) des ersten Komparators (10) und Zuordnen des Zustandes zu dem wiederherzustellenden Bit; und
- wenn die Ausgänge (CH, CL) des zweiten (14) und dritten (15) Komparators auf unterschiedlichen Zuständen in dem Moment sind, in dem ein Zustand des Ausganges des ersten Komparators abgetastet wird, Zuordnen des Komplementärwertes des Zustandes des vorhergehend wieder hergestellten Bits zu dem entsprechenden wieder hergestellten Bit.

2. Verfahren zum Begrenzen von Fehlern bei der Wiederherstellung von Bits nach Anspruch 1, **dadurch gekennzeichnet, dass** der Komplementärwert des Zustandes des vorhergehenden Bits nur dann dem wieder herzustellenden Bit zugeordnet wird, wenn die Ausgänge (CH, CL) des zweiten (14) und dritten (15) Komparators für das vorhergehende Bit auf gleichem Zustand waren.

3. Verfahren zum Begrenzen von Fehlern bei der Wiederherstellung von Bits nach Anspruch 1, **dadurch gekennzeichnet, dass** der Komplementärwert des Zustandes des vorhergehenden Bits nur dann dem wieder herzustellenden Bit zugeordnet wird, wenn das asynchrone Signal Verluste bei hohen Frequenzen erleidet.

4. Verfahren zum Begrenzen von Fehlern bei der Wiederherstellung von Bits nach Anspruch 3, **dadurch gekennzeichnet, dass** die Verluste bei hohen Frequenzen dadurch detektiert werden, wenn die Differenz der Arbeitszyklen der Ausgangssignale (CH, CL) des zweiten und dritten Komparators (14, 15) während der Synchronisationssalven (SB) als Absolutwert eine vorbestimmte Schwelle übersteigt.

5. Verfahren zum Detektieren von Signalen, die Verluste bei hohen Frequenzen erleiden, mit einem ersten Komparator zum Vergleich des Niveaus des asynchronen Signales mit einer ersten Schwelle (Vref), die als Funktion nur des Ausganges (C) des ersten Komparators während Synchronisationssalven (SB) des asynchronen Signales eingestellt ist, mit einem zweiten Komparator (14) zum Vergleich des Niveaus des asynchronen Signales mit einer zweiten Schwelle (VrefH), die mit der ersten Schwelle korreliert ist, und mit einem dritten Komparator (15) zum Vergleich des Niveaus des asynchronen Signales mit einer dritten Schwelle (VrefL), die mit der ersten Schwelle derart korreliert ist, dass die erste Schwelle zwischen der zweiten und dritten Schwelle gelegen ist, und **dadurch gekennzeichnet, dass** das Detektieren erfolgt, wenn die Differenz der Arbeitszyklen der Ausgangssignale (CH, CL) des zweiten und dritten Komparators (14, 15) während der Synchronisationssalven (SB) als Absolutwert eine vorbestimmte Schwelle übersteigt.
